# EUROPEAN PATENT APPLICATION

(11) **EP 4 403 502 A1**
(43) Date of publication of application: **24.07.2024**
(21) Application number: 23769926.9
(22) Date of filing: 17.03.2023
(51) Int. Cl.: B65H 29/18, B65H 20/10, B65G 15/58

(54) **CELL ELECTRODE PLATE FEEDING DEVICE, CELL MANUFACTURING APPARATUS, AND CELL ELECTRODE PLATE FEEDING METHOD**

(30) Priority: 18.03.2022 CN 202210268822
(71) Applicant: Contemporary Amperex Technology Co., Limited, Ningde, Fujian 352100 (CN)
(72) Inventor: YANG, Guozhong, Ningde, Fujian 352100 (CN); SUN, Xiangli, Ningde, Fujian 352100 (CN); LI, Fengdan, Ningde, Fujian 352100 (CN); XU, Minjiang, Ningde, Fujian 352100 (CN); PEI, Xu, Ningde, Fujian 352100 (CN); XIAO, Andi, Ningde, Fujian 352100 (CN); YU, Lei, Ningde, Fujian 352100 (CN); MIAO, Danyang, Ningde, Fujian 352100 (CN); WU, Xiaoping, Ningde, Fujian 352100 (CN); YANG, Chao, Ningde, Fujian 352100 (CN)
(74) Representative: Gong, Jinping
(86) International application number: PCT/CN2023/082264
(87) International publication number: WO 2023/174424

(57) **Abstract**

Provided in embodiments of the present application are a cell electrode plate feeding device, a cell manufacturing apparatus, and a cell electrode plate feeding method. The cell electrode plate feeding device comprises a conveying device and a vacuum suction device. The conveying device is configured to convey an electrode plate to be wound and comprises a support base and a conveying body, the support base comprising an accommodating cavity, the conveying body being mounted on the support base, and the conveying body being provided with a communicating portion, by means of which a space of the conveying body on a side away from the accommodating cavity is in communication with the accommodating cavity. The vacuum suction device is in communication with the accommodating cavity, and the vacuum suction device is configured to suck air between a conveying surface of the conveying body and the electrode plate, so as to enable the electrode plate to be attached to the conveying surface of the conveying body. According to the present application, the vacuum suction device is used to suck the air between the conveying surface of the conveying body and the electrode plate, so that the electrode plate can be fixed and the head of the electrode plate is prevented from swinging freely, which is conducive to improving the flatness and alignment of the electrode plate during feeding and thus improving the production efficiency of cells.

## Description

### Cross-Reference to Related Application

The present application claims the priority of Chinese patent application No. 202210268822.2, filed on March 18, 2022 and entitled "CELL ELECTRODE PLATE FEEDING DEVICE, CELL MANUFACTURING APPARATUS, AND CELL ELECTRODE PLATE FEEDING METHOD", which is incorporated in its entirety herein by reference.

### Technical Field

The present application relates to the technical field of batteries, in particular to a cell electrode plate feeding device, a cell manufacturing apparatus, and a cell electrode plate feeding method.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the battery manufacturing process, the production efficiency of cells directly affects the manufacturing efficiency of batteries.

### Summary of the Invention

The present application provides a cell electrode plate feeding device, a cell manufacturing apparatus, and a cell electrode plate feeding method, which can improve the flatness and alignment of an electrode plate during feeding, and is conducive to improving the production efficiency of cells.

In a first aspect, the present application provides a cell electrode plate feeding device. The feeding device includes a conveying device and a vacuum suction device. The conveying device is configured to convey an electrode plate to be wound and includes a support base and a conveying body, the support base including an accommodating cavity, the conveying body being mounted on the support base, and the conveying body being provided with a communicating portion, by means of which a space of the conveying body on a side away from the accommodating cavity is in communication with the accommodating cavity. The vacuum suction device is in communication with the accommodating cavity, and the vacuum suction device is configured to suck air between a conveying surface of the conveying body and the electrode plate, so as to enable the electrode plate to be attached to the conveying surface of the conveying body.

The vacuum suction device may be used to suck the air between the conveying surface of the conveying body and the electrode plate to enable the electrode plate to be attached to the conveying surface of the conveying body, so that the electrode plate is fixed and the head of the electrode plate is prevented from swinging freely. Thus, the electrode plate is allowed to reach a feeding position in accordance with a preset attitude, which improves the flatness of the electrode plate during feeding, facilitates the control of the edge position of the electrode plate, and avoids risks such as short circuits due to overlapping of edges of the positive and negative electrode plates. The flatness and alignment of the electrode plate during feeding is improved, and accordingly the yield of cells can be increased, the rejection rate can be reduced, and then the production efficiency of cells can be improved.

In some embodiments, the conveying body includes a suction region, the communicating portion is disposed in the suction region, and a width of the suction region is less than a width of the electrode plate. With this arrangement, the purpose of securing the electrode plate can be achieved while the edge of the electrode plate can be prevented from curling when being sucked.

In some embodiments, the conveying body includes a first pulley, a second pulley and a plurality of conveyor belts, the first pulley and the second pulley are rotatably mounted on the support base, respectively, the conveyor belts are mounted on the first pulley and the second pulley, every two adjacent conveyor belts have a gap therebetween, and the gaps form the communicating portion.

Since the plurality of conveyor belts are provided and every two adjacent conveyor belts have a gap therebetween, the gaps may form the communicating portion to achieve communication between the accommodating cavity and the space on the side of the conveying body away from the accommodating cavity.

In some embodiments, the conveying device further includes a first supporting plate, the first supporting plate is detachably mounted on the support base, and the first supporting plate is provided with a through hole for exposing the conveyor belts.

The first supporting plate may provide a flatter support for the electrode plate, which is conducive to improving the flatness of the electrode plate.

The conveyor belts may be exposed from the through hole, so that it is possible to avoid interference from the first supporting plate to the conveyor belts conveying the electrode plate and prevent the first supporting plate from blocking the communicating portion.

The first supporting plate is detachably mounted on the support base, and accordingly a detachable connection of the first supporting plate can be realized. The first supporting plate can be freely detached or mounted according to actual needs, and the first supporting plate can be replaced with a first supporting plate of a different specification as needed, or the first supporting plate can be replaced with a new first supporting plate in time when it is worn or damaged.

In some embodiments, the conveyor belts are not lower than the plane where the first supporting plate is located, but are slightly higher than the plane where the first supporting plate is located, which is conducive to attaching the electrode plate to the conveying surface of the conveyor belts by suction, thereby avoiding affecting the flatness of the electrode plate or scratches to the electrode plate due to collapse of the electrode plate caused by the conveyor belts being lower than the plane where the first supporting plate is located.

In some embodiments, the conveying device further includes a second supporting plate, the second supporting plate being connected to a downstream portion of the first supporting plate in a conveying direction of the conveying device.

The second supporting plate connected to the downstream portion of the first supporting plate may continue to support the electrode plate passing through the first supporting plate and prevent the electrode plate from drooping under the effect of gravity after passing through the first supporting plate, thus preventing the electrode plate from curling or being folded during feeding, and also avoiding affecting the feeding angle and alignment of the electrode plate. Moreover, the second supporting plate may be constructed such that the electrode plate reaches the feeding position along a preset angle, thus making the electrode plate tangent to a feed line of a winding needle during feeding and improving the feeding accuracy.

In some embodiments, the second supporting plate is made of a flexible material.

The second supporting plate is made of a flexible material, which may avoid damages such as scratches to the electrode plate, and is conducive to protecting the electrode plate.

In some embodiments, the second supporting plate includes an arc-shaped portion, the arc-shaped portion being bent in a direction close to the support base. The arc-shaped portion is provided such that the electrode plate may be guided to bend in a direction close to the support base, helping the electrode plate to maintain an attitude of being tangent to the feed line of the winding needle when the electrode plate reaches the feeding position, thus improving the feeding accuracy.

In some embodiments, a transition fillet is provided at a junction between a first side surface of the second supporting plate and a second side surface of the second supporting plate, the first side surface is a side surface of the second supporting plate away from the conveying body, and the second side surface is arranged adjacent to the first side surface. With the transition fillet, it is possible to avoid sharp corners of the second supporting plate and prevent the second supporting plate from scratching the electrode plate.

In some embodiments, the cell electrode plate feeding device further includes a blowing device, the blowing device being configured to blow air to a side surface, close to the conveying surface of the conveying body, of the electrode plate leaving the conveying body.

With the blowing device, air can be blown to the side surface, close to the conveying surface of the conveying body, of the electrode plate leaving the conveying body, i.e., to the back side of the electrode plate, so that the electrode plate leaving the conveying body can be pushed upwardly without drooping downwardly under the effect of gravity, which is conducive to maintaining the feeding angle of the electrode plate.

In some embodiments, the included angle formed between a flow direction of an airflow blown from the blowing device and the conveying surface of the conveying body is adjustable.

The included angle formed between the flow direction of the airflow blown from the blowing device and the conveying surface of the conveying body is adjustable, so that the flow direction of the airflow blown from the blowing device can be adjusted according to the actual situations, to ensure that the electrode plate is fed at a preset angle and to ensure the accuracy of the feeding angle.

In some embodiments, the blowing device includes an air delivery pipe, the air delivery pipe is provided with a plurality of air outlet holes, and the air delivery pipe is rotatably disposed relative to the support base.

Since the air delivery pipe is rotatably disposed relative to the support base, the flow direction of the airflow blown from the blowing device can be adjusted by rotating the air delivery pipe, and accordingly the included angle between the flow direction of the airflow blown from the blowing device and the conveying surface of the conveying device can be adjusted to meet requirements for different specifications of electrode plates.

In some embodiments, the plurality of air outlet holes are spaced apart in a direction perpendicular to the conveying direction of the conveying device. With this arrangement, the plurality of air outlet holes may be spaced apart in a width direction of the electrode plate, so that the electrode plate can be subjected to a blowing force in the width direction. Since the electrode plate is subjected to a balanced force in the width direction, tilting of the electrode plate is avoided.

In some embodiments, the blowing device further includes a connecting member, the air delivery pipe is rotatably mounted on the support base, the support base is provided with a first connecting hole, and the connecting member is detachably inserted into the first connecting hole and abuts against the air delivery pipe, so as to keep the air delivery pipe and the support base fixed relative to each other after the relative positions of the air delivery pipe and the support base are adjusted. By the connecting member, an air outlet direction of the air delivery pipe may be adjusted while the adjusted air delivery pipe may be fixed.

In some embodiments, the cell electrode plate feeding device further includes a connecting plate, the support base is connected to the connecting plate, and the angle formed between the support base and the connecting plate is adjustable.

Since the angle formed between the support base and the connecting plate is adjustable, the feeding angle of the electrode plate can be adjusted by adjusting the angle formed between the support base and the connecting plate. For example, the feeding angle of the electrode plate can be adjusted according to the position of the winding needle or the size of the winding needle, to make the electrode plate as parallel as possible to the feed line of the winding needle, thus improving the feeding accuracy.

In some embodiments, the support base and the connecting plate are rotatably connected. This arrangement allows for the adjustment of the angle formed between the support base and the connecting plate by rotating the support base.

In some embodiments, the support base includes a connecting pin, the connecting plate is provided with an arc-shaped second connecting hole, and the connecting pin is inserted in the second connecting hole.

With the arrangement of the connecting pin and the second connecting hole, it is possible to move the connecting pin in the second connecting hole when the support base rotates relative to the connecting plate, thereby guiding the relative movement of the support base and the connecting plate in accordance with the shape of the second connecting hole.

In a second aspect, the present application provides a cell manufacturing apparatus, including a cell electrode plate feeding device in the foregoing embodiments.

In a third aspect, the present application provides a cell electrode plate feeding method based on the cell electrode plate feeding device described above, the method including:
moving a cell electrode plate feeding device to a preset position before feeding; and
conveying an electrode plate to be wound by means of a conveying device, and during conveying, sucking air between a conveying surface of a conveying body and the electrode plate by means of a vacuum suction device, so as to enable the electrode plate to be attached to the conveying surface of the conveying body.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural diagram of a cell electrode plate feeding device according to some embodiments disclosed in the present application before an electrode plate reaches a conveying device;
FIG. 2 is a schematic structural diagram of a cell electrode plate feeding device in a state of use, according to some embodiments disclosed in the present application;
FIG. 3 is a schematic structural diagram of a cell electrode plate feeding device at a first angle, according to some embodiments disclosed in the present application;
FIG. 4 is a schematic structural diagram of a cell electrode plate feeding device at a second angle, according to some embodiments disclosed in the present application;
FIG. 5 is a schematic structural diagram of a first supporting plate in a cell electrode plate feeding device according to some embodiments disclosed in the present application;
FIG. 6 is a front view of a cell electrode plate feeding device according to some embodiments disclosed in the present application;
FIG. 7 is a top view of a cell electrode plate feeding device according to some embodiments disclosed in the present application;
FIG. 8 is a side view of a cell electrode plate feeding device according to some embodiments disclosed in the present application;
FIG. 9 is a schematic structural diagram of a support base before and after rotation relative to a connecting plate in a cell electrode plate feeding device according to some embodiments disclosed in the present application;
FIG. 10 is a flow chart of a cell electrode plate feeding method according to some embodiments disclosed in the present application.

In the accompanying drawings, the figures are not drawn to scale.

List of reference signs:
100. Electrode plate; 101. Electrode plate body; 102. Tab;
10. Conveying device; 11. Support base; 111. Accommodating cavity; 112. First mounting plate; 113. Second mounting plate; 114. Third mounting plate; 115. Fourth mounting plate; 116. Fifth mounting plate; 117. First connecting hole; 118. Sixth mounting plate; 119. Connecting pin; 12. Conveying body; 121. First pulley; 122. Second pulley; 123. Conveyor belt; 124. Drive wheel; 125. Follower wheel; 126. Electric motor; 13. First supporting plate; 131. First retaining plate; 132. Supporting plate body; 133. Through hole; 134. Snap-fit portion; 135. Second retaining plate; 14. Second supporting plate; 141. Transition fillet;
20. Vacuum suction device;
30. Blowing device; 31. Air delivery pipe; 32. Air outlet hole; 33. Joint;
40. Connecting plate; 41. Second connecting hole; 42. First connecting portion; 43. Second connecting portion.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In addition, the term "perpendicular" does not mean being perpendicular in the strict sense, but within an allowable range of tolerance. The term "parallel" does not mean being parallel in the strict sense, but within an allowable range of tolerance.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist. For example, A and/or B can include: only A exists, both A and B exist, and only B exists. In addition, the character "/" herein generally indicates an "or" relationship between the associated objects.

In the description of the embodiments of the present application, the phrase "a plurality of" means two or more, unless otherwise explicitly and specifically defined. Similarly, "a plurality of groups" means two or more groups, and "a plurality of pieces" means two or more pieces, unless otherwise explicitly and specifically defined.

In the description of the embodiments of the present application, the orientations or positional relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the accompanying drawings, are merely intended to facilitate and simplify the description of the embodiments of the present application, rather than indicating or implying that the apparatus or element referred to must have a particular orientation or be constructed and operated in a particular orientation, and therefore cannot be construed as limiting the embodiments of the present application.

In the description of the embodiments of the present application, unless otherwise explicitly specified and defined, the technical terms such as "mounting", "connecting", "connection" and "fixing" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

With the increasing market demand for traction batteries, the production efficiency of the traction batteries has gradually attracted attention.

At present, lithium batteries are mainly of a stacked structure and a winding structure. A battery in the winding structure is processed in the following way: first, a negative electrode plate, a separator, a positive electrode plate and another separator are fed in an orderly manner respectively, and then four strip materials are wound around a winding needle according to a preset winding length.

The inventor of the present application has noticed that during winding, the positive electrode plate and the negative electrode plate are cut off according to a preset length and form free segments at a certain distance at the head and the tail. Before a winding process, the electrode plate is subjected to processes such as coating, cold pressing, dividing, die-cutting, and slitting respectively. In particular, when the electrode plate is subjected to the process of cold pressing, the electrode plate may have a wavy edge after cold pressing due to the already existing mechanical tolerances such as cylindricity and runout of cold press rollers, which may lead to the thickness deviation of films before cold pressing.

The inventor found after research that the reason for forming the wavy edge is mainly that, after the process of coating , the thickness of the electrode plate deviates, that is to say, some parts of the electrode plate are thick and some parts are relatively thin; when passing through a roll gap between cold press rollers, a coated portion of the electrode plate is deformed seriously by pressure, the copper foil and aluminum foil with good ductility are also deformed along with it, while an uncoated portion of the electrode plate has small deformation, and the difference in the degree of deformation results in the forming of the wavy edge of the electrode plate; and moreover, the wavy edge will be more significant after the electrode plate is slit.

Upon further research, the inventor recognized that current solutions essentially try to control the specification of the wavy edge, but cannot avoid the forming of the wavy edge.

During winding, the head and tail of the electrode plate lose tension after being cut off, and the electrode plate in a free state is prone to deviation during feeding and discharging. In cell design, the edges of the positive electrode plate and the negative electrode plate should be kept at a certain specification of misalignment, so as to avoid overlapping of the edges of the positive electrode plate and the negative electrode plate, and to reduce the risks such as short circuits. However, if the head and the tail of the electrode plate are in a free state, and there is a deviation during feeding or discharging, the edges of the positive electrode plate and the negative electrode plate may still overlap even though the edges of the positive electrode plate and the negative electrode plate are kept at a certain specification of misalignment in the stage of design, which increases the risks such as short circuits.

Based on the above research, the inventor proposes a cell electrode plate feeding device. The feeding device may suck air between a conveying surface of a conveying device and the electrode plate by a vacuum suction device, to enable the electrode plate to be attached to the conveying surface of the conveying device, so that the head of the electrode plate is prevented from swinging freely and the electrode plate is fixed. Thus, the electrode plate is allowed to reach a feeding position in accordance with a preset attitude, which improves the flatness and alignment of the electrode plate during feeding, and avoids risks such as short circuits due to overlapping of edges of the positive and negative electrode plates.

The cell electrode plate feeding device in the embodiments of the present application is used as a part of a cell manufacturing apparatus for assisting the feeding of the electrode plate, thus improving the flatness and alignment of the electrode plate during feeding, significantly improving the yield of cells, reducing the rejection rate, and then improving the production efficiency of cells.

The structure of the cell electrode plate feeding device according to some embodiments of the present application will be described in detail below.

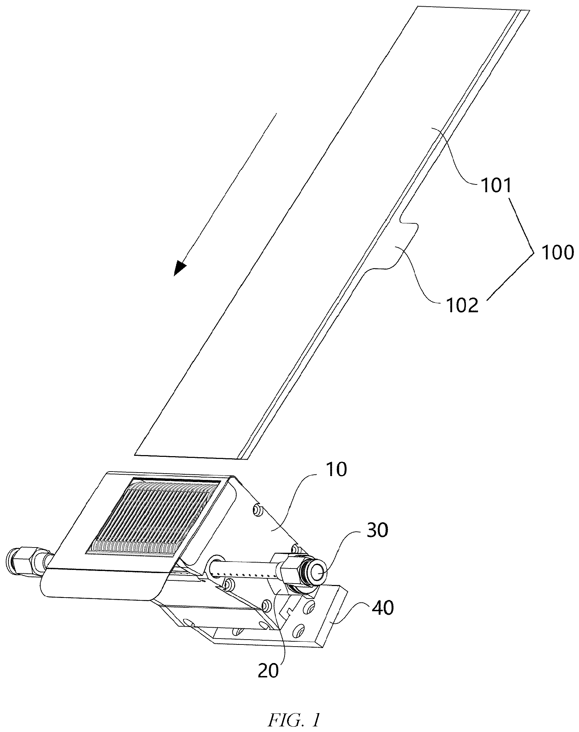

With reference to FIGS. 1 to 3, in some embodiments of the present application, the cell electrode plate feeding device includes a conveying device 10 and a vacuum suction device 20. The conveying device 10 is configured to convey an electrode plate 100 to be wound, and the conveying device 10 includes a support base 11 and a conveying body 12, the support base 11 including an accommodating cavity 111, the conveying body 12 being mounted on the support base 11, and the conveying body 12 being provided with a communicating portion, by means of which a space of the conveying body 12 on a side away from the accommodating cavity 111 is in communication with the accommodating cavity 111. The vacuum suction device 20 is in communication with the accommodating cavity 111, and the vacuum suction device 20 is configured to suck air between a conveying surface of the conveying body 12 and the electrode plate 100, so as to enable the electrode plate 100 to be attached to the conveying surface of the conveying body 12.

The vacuum suction device 20 has the function of air suction to vacuumize a substantially enclosed space into a vacuum space.

The vacuum suction device 20 is in communication with the accommodating cavity 111. Since the space of the conveying body 12 on the side away from the accommodating cavity 111 is in communication with the accommodating cavity 111 by the communicating portion provided on the conveying body 12 by the accommodating cavity 111, the vacuum suction device 20 may be used to suck the air between the conveying surface of the conveying body 12 and the electrode plate 100 to enable the electrode plate 100 to be attached to the conveying surface of the conveying body 12, so that the electrode plate 100 is fixed and the head of the electrode plate 100 is prevented from swinging freely. Thus, the electrode plate 100 is allowed to reach a feeding position in accordance with a preset attitude, which improves the flatness of the electrode plate 100 during feeding, facilitates the control of the edge position of the electrode plate 100, and avoids risks such as short circuits due to overlapping of edges of the positive and negative electrode plates. The flatness and alignment of the electrode plate 100 during feeding is improved, and accordingly the yield of cells can be increased, the rejection rate can be reduced, and then the production efficiency of cells can be improved.

The vacuum suction device 20 may include a connector, an air guide pipe, and an air pump. A joint of the air pump is connected to the air guide pipe, the connector is mounted on the support base 11, and the connector is configured to connect the accommodating cavity 111 and the air guide pipe, so that air inside the accommodating cavity 111 is sucked by the air pump. As air in the accommodating cavity 111 gradually decreases, the accommodating cavity 111 forms a negative pressure region; and air in the space on the side of the conveying body 12 away from the accommodating cavity 111 may enter the accommodating cavity 111 through the communicating portion, thus achieving the purpose of sucking the air in the space on the side of the conveying body 12 away from the accommodating cavity 111.

In some embodiments, the conveying body 12 includes a suction region, the communicating portion is disposed in the suction region, and the width of the suction region is less than the width of the electrode plate 100. With this arrangement, the purpose of securing the electrode plate 100 can be achieved while the edge of the electrode plate 100 can be prevented from curling when being sucked.

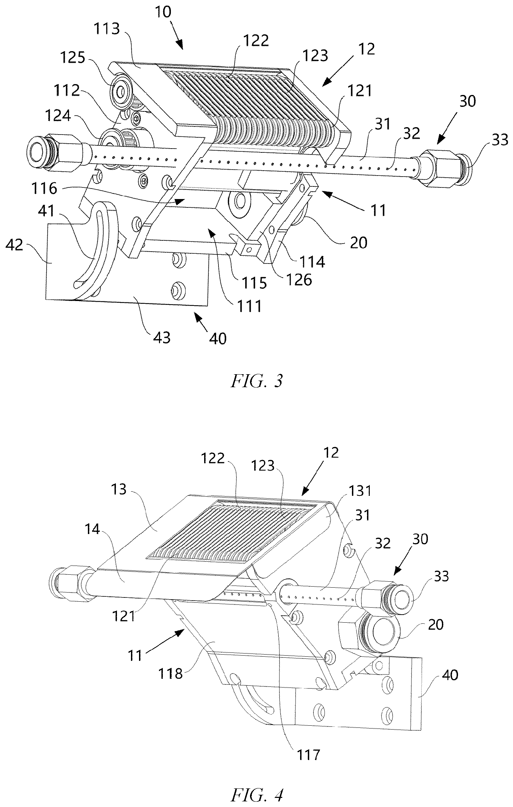

As shown in FIGS. 3 and 4, in some embodiments, the conveying body 12 includes a first pulley 121, a second pulley 122 and a plurality of conveyor belts 123, wherein the first pulley 121 and the second pulley 122 are rotatably mounted on the support base 11, respectively, the conveyor belts 123 are mounted on the first pulley 121 and the second pulley 122, every two adjacent conveyor belts 123 have a gap therebetween, and the gaps form the communicating portion.

Since the plurality of conveyor belts 123 are provided and every two adjacent conveyor belts 123 have a gap therebetween, the gaps may form the communicating portion to achieve communication between the accommodating cavity 111 and the space on the side of the conveying body 12 away from the accommodating cavity 111.

The number of the first pulley 121 and the second pulley 122 may be set flexibly according to needs. For example, in some embodiments, one first pulley 121 and one second pulley 122 may be provided, and the first pulley 121 and the second pulley 122 have a certain axial length; the first pulley 121 is provided with a plurality of first accommodating grooves along its axial direction, the second pulley 122 is provided with a plurality of second accommodating grooves along its axial direction, the first accommodating grooves and the second accommodating grooves are provided in one-to-one correspondence, and different conveyor belts 123 are respectively mounted in different first accommodating grooves and second accommodating grooves corresponding thereto. In some other embodiments, a plurality of first pulleys 121 and a plurality of second pulleys 122 may be provided, each conveyor belt 123 is mounted on the corresponding first pulley 121 and the corresponding second pulley 122, the plurality of first pulleys 121 may be mounted on the same rotating shaft along the axial direction, and the plurality of second pulleys 122 may be mounted on another rotating shaft along the axial direction.

The conveyor belts 123 may be belts. The use of the conveyor belts 123 is more conducive to securing the electrode plate 100 than a conveyor chain.

In some embodiments, the conveying device 10 further includes a first supporting plate 13, the first supporting plate 13 is detachably mounted on the support base 11, and the first supporting plate 13 is provided with a through hole 133 for exposing the conveyor belts 123.

The first supporting plate 13 may provide a flatter support for the electrode plate 100, which is conducive to improving the flatness of the electrode plate 100.

The conveyor belts 123 may be exposed from the through hole 133, so that it is possible to avoid interference from the first supporting plate 13 to the conveyor belts 123 conveying the electrode plate 100 and prevent the first supporting plate 13 from blocking the communicating portion.

The first supporting plate 13 is detachably mounted on the support base 11, and accordingly a detachable connection of the first supporting plate 13 can be realized. The first supporting plate 13 can be freely detached or mounted according to actual needs, and the first supporting plate 13 can be replaced with a first supporting plate of a different specification as needed, or the first supporting plate 13 can be replaced with a new first supporting plate 13 in time when it is worn or damaged.

There may be various options for the specific connection manner between the first supporting plate 13 and the support base 11, for example, a bolt connection or a snap-fit connection may be used.

In some embodiments, the conveyor belts 123 are not lower than the plane where the first supporting plate 13 is located. According to such an arrangement, the conveyor belts 123 may be slightly higher than the plane where the first supporting plate 13 is located, which is conducive to attaching the electrode plate 100 to the conveying surface of the conveyor belts 123 by suction, thereby avoiding affecting the flatness of the electrode plate 100 or scratches to the electrode plate 100 due to collapse of the electrode plate 100 caused by the conveyor belts 123 being lower than the plane where the first supporting plate 13 is located.

In some embodiments, the conveying device 10 further includes a second supporting plate 14, the second supporting plate 14 being connected to a downstream portion of the first supporting plate 13 in a conveying direction of the conveying device 10.

The second supporting plate 14 connected to the downstream portion of the first supporting plate 13 can continue to support the electrode plate 100 passing through the first supporting plate 13 and prevent the electrode plate 100 from drooping under the effect of gravity after passing through the first supporting plate 13, thus preventing the electrode plate 100 from curling or being folded during feeding, and also avoiding affecting the feeding angle and alignment of the electrode plate 100. Moreover, the second supporting plate 14 may be constructed such that the electrode plate 100 reaches the feeding position along a preset angle, thus making the electrode plate 100 tangent to a feed line of a winding needle during feeding and improving the feeding accuracy.

In some embodiments, the second supporting plate 14 is made of a flexible material. The flexible material may include soft plastics, rubber, or the like.

The second supporting plate 14 is made of a flexible material, which may avoid damages such as scratches to the electrode plate 100, and is conducive to protecting the electrode plate 100.

In some embodiments, the second supporting plate 14 includes an arc-shaped portion, the arc-shaped portion being bent in a direction close to the support base 11. The arc-shaped portion is provided such that the electrode plate 100 may be guided to bend in a direction close to the support base 11, helping the electrode plate 100 to maintain an attitude of being tangent to the feed line of the winding needle when the electrode plate reaches the feeding position, thus improving the feeding accuracy.

In some embodiments, a transition fillet 141 is provided at a junction between a first side surface of the second supporting plate 14 and a second side surface of the second supporting plate 14, the first side surface is a side surface of the second supporting plate 14 away from the conveying body 12, and the second side surface is arranged adjacent to the first side surface.

With the transition fillet 141, it is possible to avoid sharp corners of the second supporting plate 14 and prevent the second supporting plate 14 from scratching the electrode plate 100.

In some embodiments, the cell electrode plate feeding device further includes a blowing device 30, the blowing device 30 being configured to blow air to a side surface, close to the conveying surface of the conveying body 12, of the electrode plate 100 leaving the conveying body 12.

With the blowing device 30, air can be blown to the side surface, close to the conveying surface of the conveying body 12, of the electrode plate 100 leaving the conveying body 12, i.e., to the back side of the electrode plate 100, so that the electrode plate 100 leaving the conveying body 12 can be pushed upwardly without drooping downwardly under the effect of gravity, which is conducive to maintaining the feeding angle of the electrode plate 100.

In some embodiments, the included angle formed between a flow direction of an airflow blown from the blowing device 30 and the conveying surface of the conveying body 12 is adjustable in size.

The included angle formed between the flow direction of the airflow blown from the blowing device 30 and the conveying surface of the conveying body 12 is adjustable, so that the flow direction of the airflow blown from the blowing device 30 can be adjusted according to the actual situations, to ensure that the electrode plate 100 is fed at a preset angle and to ensure the accuracy of the feeding angle.

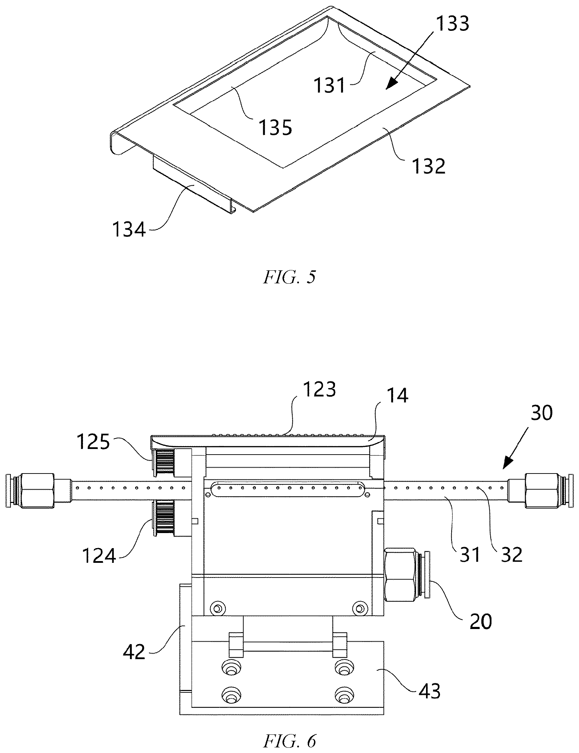

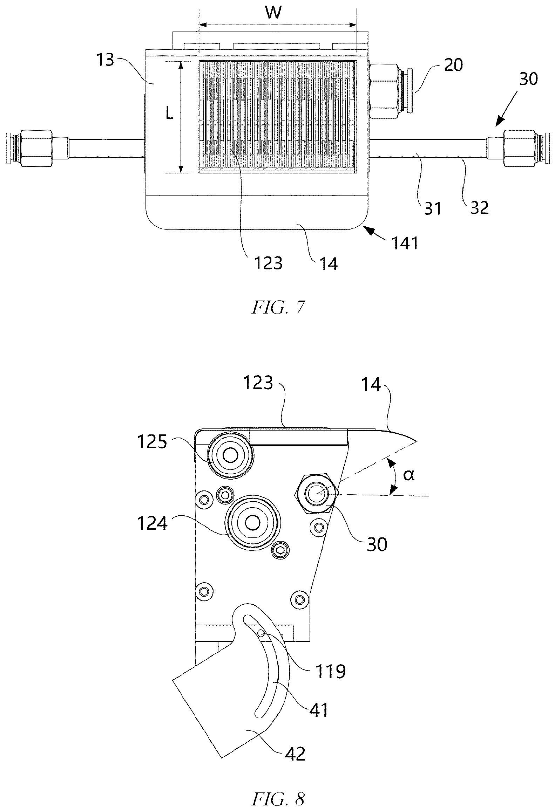

As shown in FIGS. 6 and 7, in some embodiments, the blowing device 30 includes an air delivery pipe 31, the air delivery pipe 31 is provided with a plurality of air outlet holes 32, and the air delivery pipe 31 is rotatably disposed relative to the support base 11.

Since the air delivery pipe 31 is rotatably disposed relative to the support base 11, the flow direction of the airflow blown from the blowing device 30 can be adjusted by rotating the air delivery pipe 31, and accordingly the included angle between the flow direction of the airflow blown from the blowing device 30 and the conveying surface of the conveying body 12 can be adjusted to meet requirements for different specifications of electrode plates 100.

In some embodiments, the blowing device 30 further includes a connecting member, the air delivery pipe 31 is rotatably mounted on the support base 11, the support base 11 is provided with a first connecting hole 117, and the connecting member is detachably inserted into the first connecting hole 117 and abuts against the air delivery pipe 31, so as to keep the air delivery pipe 31 and the support base 11 fixed relative to each other after the relative positions of the air delivery pipe 31 and the support base 11 are adjusted.

By the connecting member, an air outlet direction of the air delivery pipe 31 may be adjusted while the adjusted air delivery pipe 31 may be fixed.

When it is necessary to adjust the air outlet direction of the air delivery pipe 31, the connecting member is first removed from the first connecting hole 117, and then the air delivery pipe 31 is rotated, such that the relative positions of the air delivery pipe 31 and the support base 11 are adjusted. After the adjustment is completed, the connecting member is then mounted into the first connecting hole 117 to keep the air delivery pipe 31 and the support base 11 fixed relative to each other.

The connecting member may be a bolt, the first connecting hole 117 is provided with threads on its wall, and the connecting member is connected to the first connecting hole 117 by threaded fit.

In some embodiments, the plurality of air outlet holes 32 are spaced apart in a direction perpendicular to the conveying direction of the conveying device 10. With this arrangement, the plurality of air outlet holes 32 may be spaced apart in a width direction of the electrode plate 100 so that the electrode plate 100 can be subjected to a blowing force in the width direction. Since the electrode plate 100 is subjected to a balanced force in the width direction, tilting of the electrode plate 100 is avoided.

As shown in FIG. 8, the included angle α is an included angle between a flow direction of an airflow blown from the blowing device 30 and the conveying surface (i.e., the horizontal plane shown in FIG. 8) of the conveying body 12. The included angle α can be adjusted by rotating the air delivery pipe 31.

In some embodiments, the cell electrode plate feeding device further includes a connecting plate 40, the support base 11 is connected to the connecting plate 40, and the angle formed between the support base 11 and the connecting plate 40 is adjustable.

Since the angle formed between the support base 11 and the connecting plate 40 is adjustable, the feeding angle of the electrode plate 100 can be adjusted by adjusting the angle formed between the support base 11 and the connecting plate 40. For example, the feeding angle of the electrode plate 100 can be adjusted according to the position of the winding needle or the size of the winding needle, to make the electrode plate 100 as parallel as possible to the feed line of the winding needle, thus improving the feeding accuracy.

In some embodiments, the support base 11 and the connecting plate 40 are rotatably connected. This arrangement allows for the adjustment of the angle formed between the support base 11 and the connecting plate 40 by rotating the support base 11.

In other embodiments, the support base 11 and the connecting plate 40 may be slidably connected. The angle formed between the support base 11 and the connecting plate 40 can be adjusted by adjusting the relative positions of the support base 11 and the connecting plate 40.

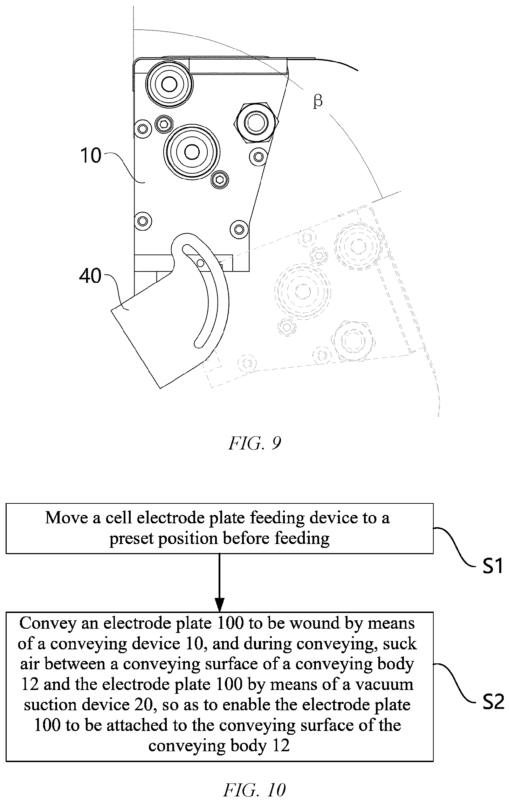

FIG. 9 shows a schematic structural diagram in which the support base 11 is rotated at an angle of β relative to the connecting plate 40.

In some embodiments, the cell electrode plate feeding device further includes a guide mechanism, the guide mechanism being used to guide the relative movement of the support base 11 and the connecting plate 40.

In some embodiments, the guide mechanism includes a connecting pin 119 disposed on the support base 11 and an arc-shaped second connecting hole 41 disposed on the connecting plate 40, and the connecting pin 119 is inserted in the second connecting hole 41.

With the arrangement of the connecting pin 119 and the second connecting hole 41, it is possible to move the connecting pin 119 in the second connecting hole 41 when the support base 11 rotates relative to the connecting plate 40, thereby guiding the relative movement of the support base 11 and the connecting plate 40 in accordance with the shape of the second connecting hole 41.

The specific structure of the cell electrode plate feeding device according to an embodiment of the present application is described below with reference to FIGS. 1 to 9.

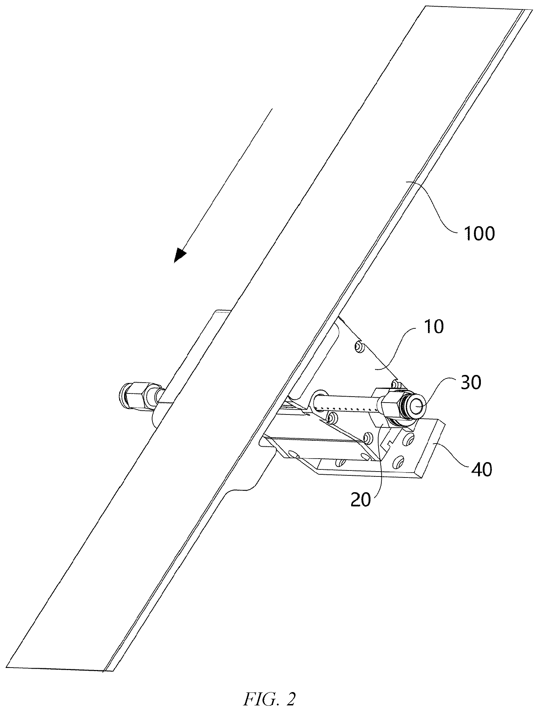

FIG. 1 shows a schematic structural diagram of an electrode plate 100 before it reaches a conveying device 10. FIG. 2 shows a schematic structural diagram of the electrode plate 100 moving under a conveying action of the conveying device 10. Directions indicated by the arrows in FIGS. 1 and 2 are moving directions of the electrode plate 100. The electrode plate 100 includes an electrode plate body 101 and tabs 102. A plurality of tabs 102 are spaced apart on the electrode plate body 101. After a cell is shaped by winding, the tabs 102 of various layers of the electrode plate 100 are basically aligned. In order to prevent misalignment of the tabs 102 of various layers of the electrode plate 100 after the cell is shaped by winding, it is necessary to preset the distance between the head of the electrode plate body 101 and the first tab 102, while the accuracy of the feeding position of the electrode plate 100 is ensured. If the feeding position of the electrode plate 100 is misaligned, or if the head of the electrode plate 100 is curled due to free swinging, or the like, it is impossible to ensure that the tabs 102 of various layers of the electrode plate 100 are aligned, and besides, it may result in tilting of the electrode plate 100, causing problems such as overlapping of the edges of the positive electrode plate and the negative electrode plate, which is prone to risks such as short circuits.

The cell electrode plate feeding device includes a conveying device 10, a vacuum suction device 20, a blowing device 30, and a connecting plate 40.

As shown in FIGS. 3 and 4, the conveying device 10 includes a support base 11, a conveying body 12, a first supporting plate 13 and a second supporting plate 14.

The support base 11 includes a first mounting plate 112, a second mounting plate 113, a third mounting plate 114, a fourth mounting plate 115, a fifth mounting plate 116, and a sixth mounting plate 118.

The conveying body 12 includes a first pulley 121, a second pulley 122, conveyor belts 123, a drive wheel 124, a follower wheel 125, and an electric motor 126. The conveyor belts 123 are mounted on the first pulley 121 and the second pulley 122. The drive wheel 124 and the follower wheel 125 are connected to each other by a synchronous belt, the follower wheel 125 is connected to the second pulley 122 by a coupling, and the electric motor 126 is connected to the drive wheel 124 in a drive manner. The electric motor 126 drives the drive wheel 124 to rotate, the drive wheel 124 drives the follower wheel 125 to rotate by means of the synchronous belt, the follower wheel 125 further drives the second pulley 122 to rotate, and the first pulley 121 rotates along with the second pulley 122 under the transmission of the conveyor belts 123. The drive wheel 124 and the follower wheel 125 are mounted on the first mounting plate 112.

Taking the direction illustrated in FIG. 3 as a reference direction, the first mounting plate 112 is a left-side plate, the second mounting plate 113 is a top plate, the third mounting plate 114 is a right-side plate, the fourth mounting plate 115 is a bottom plate, the fifth mounting plate 116 is a rearside plate, and the sixth mounting plate 118 is a front-side plate; the first pulley 121, the second pulley 122, and the conveyor belts 123 are disposed between the second mounting plate 113 and the third mounting plate 114; and the first mounting plate 112, the second mounting plate 113, the third mounting plate 114, the fourth mounting plate 115, the fifth mounting plate 116, the sixth mounting plate 118, the first pulley 121, the second pulley 122, and the conveyor belts 123 enclose a substantially closed chamber, i.e., the accommodating cavity 111. The electric motor 126 is disposed inside the accommodating cavity 111.

The second mounting plate 113 is an L-shaped plate, a vertical portion of the second mounting plate 113 is connected to the first mounting plate 112, and a horizontal portion of the second mounting plate 113 extends in a direction away from the third mounting plate 114 to cover the drive wheel 124 and the follower wheel 125 mounted on the left side of the first mounting plate 112. The first pulley 121, the second pulley 122 and the conveyor belts 123 are disposed between the vertical portion of the second mounting plate 113 and the third mounting plate 114.

The first supporting plate 13 is disposed above the support base 11, and the first supporting plate 13 is connected to the second mounting plate 113 in a snap-fit manner. The second supporting plate 14 is connected to a downstream portion of the first supporting plate 13. The hardness of the first supporting plate 13 is greater than the hardness of the second supporting plate 14. The second supporting plate 14 is made of a flexible material. The second supporting plate 14 have transition fillets 141 as corners.

The vacuum suction device 20 is connected to the third mounting plate 114 and is in air communication with the accommodating cavity 111.

The blowing device 30 is mounted on the support base 11. The blowing device 30 includes an air delivery pipe 31. The air delivery pipe 31 is erected between the first mounting plate 112 and the third mounting plate 114. The air delivery pipe 31 is provided with a plurality of air outlet holes 32 evenly spaced apart in an axial direction thereof. The length of the air delivery pipe 31 is greater than the distance between the first mounting plate 112 and the third mounting plate 114. The air delivery pipe 31 includes a first pipe section in the accommodating cavity 111, and a second pipe section and a third pipe section located outside the accommodating cavity 111. The second pipe section and the third pipe section are located at two ends of the first pipe section, respectively. The first pipe section, the second pipe section and the third pipe section are all provided with air outlet holes 32. The two ends of the air delivery pipe 31 are respectively provided with joints 33, and the joints 33 are used to be connected to an air source or an adapter pipe connected to the air source.

In order to prevent the sixth mounting plate 118 from blocking the air outlet holes 32 on the air delivery pipe 31, the sixth mounting plate 118 is provided with via holes through which air ejected through the air outlet holes 32 can be blown to the electrode plate 100.

The support base 11 is located below the first supporting plate 13 and the second supporting plate 14, so that the air ejected through the air outlet holes 32 can be blown toward the back side of the electrode plate 100 and lift the electrode plate 100 upward.

The sixth mounting plate 118 is provided with a first connecting hole 117, and the first connecting hole 117 is in communication with the accommodating cavity 111. The connecting member is inserted into the first connecting hole 117 and abuts against the air delivery pipe 31 to maintain the relative stability of the air delivery pipe 31 and the support base 11. After the connecting member is removed, an ejection direction of the air outlet holes 32 can be adjusted by rotating the air delivery pipe 31.

The connecting plate 40 includes a first connecting portion 42 and a second connecting portion 43, and the included angle between the first connecting portion 42 and the second connecting portion 43 may be 90°. The second connecting portion 43 is configured to mount the support base 11 to a preset fixed component. The first connecting portion 42 is rotatably connected to the support base 11. The first connecting portion 42 is provided with a second connecting hole 41. The first mounting plate 112 of the support base 11 is provided with a connecting pin 119. The connecting pin 119 is inserted into the second connecting hole 41. The second connecting hole 41 is arc-shaped.

As shown in FIG. 5, the first supporting plate 13 includes a supporting plate body 132, the supporting plate body 132 is of a flat plate structure, the supporting plate body 132 is provided with a through hole 133, and the conveyor belts 123 are exposed through the through hole 133.

A first retaining plate 131 is provided underneath a first side edge of the supporting plate body 132, a snap-fit portion 134 is provided underneath a second side edge opposite the first side edge, a second retaining plate 135 is provided underneath a third side edge located between the first side edge and the second side edge, and no retaining plate is provided underneath a fourth side edge opposite the third side edge.

The snap-fit portion 134 is L-shaped. The snap-fit portion 134 is connected to the supporting plate body 132 to form a U-shaped structure. The mounting plate of the support base 11 may be inserted into the U-shaped structure, thereby realizing a snap-fit connection between the first supporting plate 13 and the support base 11.

The snap-fit portion 134 includes a first portion connected to the supporting plate body 132 and a second portion parallel to the supporting plate body 132. The distance between the second portion and the supporting plate body 132 is equal to or slightly greater than the thickness of the second mounting plate 113 of the support base 11, so that the second mounting plate 113 can be smoothly inserted into an accommodating space formed by the snap-fit portion 134 and the supporting plate body 132 to realize the snap-fit connection.

When the first supporting plate 13 is mounted, first the snap-in portion 134 may be connected to the second mounting plate 113, then the first retaining plate 131 and the third mounting plate 114 of the support base 11 are aligned, and then the first supporting plate 13 is pressed down, so that the first supporting plate 13 and the support base 11 are fixed relative to each other in a first direction (a direction from the first side of the first supporting plate 13 pointing to the second side or the second side pointing to the first side). Next, the first supporting plate 13 is pushed along a direction perpendicular to the first direction, so that the second retaining plate 135 is in contact with a rear plate (the mounting plate disposed opposite the fifth mounting plate) of the support base 11, so that the first supporting plate 13 and the support base 11 are fixed relative to each other in the direction perpendicular to the first direction.

If the first supporting plate 13 is removed, since no retaining plate is provided underneath the fourth side edge of the first supporting plate 13, the first supporting plate 13 can be pushed in the direction perpendicular to the first direction so as to cause the second retaining plate 135 to leave the rear plate of the support base 11, then the first retaining plate 131 is lifted upwardly and the first retaining plate 131 is allowed to leave the support base 11, and then the first supporting plate 13 is pushed in the first direction to disengage the snap-fit portion 134 from the second mounting plate 113, so that the first supporting plate 13 is removed.

The use of the snap-fit connection between the first supporting plate 13 and the support base 11 may realize the rapid disassembly and assembly of the first supporting plate 13, which allows the first supporting plate 13 to be quickly replaced and adjusted according to different types of cells, thus improving the commissioning efficiency.

As shown in FIG. 6, the conveyor belts 123 are slightly above the plane where the first supporting plate 13 is located.

As shown in FIG. 7, the suction region formed by the conveying body 12 has a width W and a length L. The width W of the suction region is less than the width of the electrode plate 100.

As shown in FIG. 8, the included angle α is an included angle between a flow direction of an airflow blown from the blowing device 30 and the conveying surface of the conveying body 12 (i.e., the illustrated horizontal plane). The included angle α can be adjusted by rotating the air delivery pipe 31.

FIG. 9 shows a schematic structural diagram in which the support base 11 is rotated at an angle of β relative to the connecting plate 40.

When the cell electrode plate feeding device provided in the present application is configured to assist the feeding of the electrode plate, it is necessary to first move the cell electrode plate feeding device to a preset position which is located upstream of a winding position; then, the angle between the support base 11 and the connecting plate 40 and an air outlet direction of the air outlet holes 32 of the blowing device 30 are adjusted according to the specification of the electrode plate 100 to be wound, and the specification of the winding needle for carrying the electrode plate 100; then, the electrode plate 100 is lapped on the conveying device 10, the conveying device 10, the vacuum suction device 20 and the blowing device 30 are started, and the electrode plate 100 is conveyed by the conveying device 10, and during conveying, air in the space between the conveying surface of the conveying device 10 and the electrode plate 100 is sucked by means of the vacuum suction device 20, to enable the electrode plate 100 to be attached to the conveying surface, and at the same time, the blowing device 30 blows air to the back side of the electrode plate 100 to prevent the electrode plate 100 from drooping; and finally, when the head of the electrode plate 100 reaches the winding position to start to be wound, the electrode plate 100 may be pulled tightly because the electrode plate 100 is subjected to a pulling force generated by the rotation of the winding needle, and at this point, the conveying device 10, the vacuum suction device 20, and the blowing device 30 may be turned off and the cell electrode plate feeding device is allowed to leave the preset position.

Based on the various embodiments of the cell electrode plate feeding device provided in the present application, the present application further provides a cell manufacturing apparatus, the cell manufacturing apparatus including the cell electrode plate feeding device described above.

The positive effects of the cell electrode plate feeding device in various embodiments described above are also applicable to the cell manufacturing apparatus, and will not be described in detail herein.

As shown in FIG. 10, the present application further provides a cell electrode plate feeding method, including
Step S1: moving a cell electrode plate feeding device to a preset position before feeding; and
Step S2: conveying an electrode plate 100 to be wound by means of a conveying device 10, and during conveying, sucking air between a conveying surface of a conveying body 12 and the electrode plate 100 by means of a vacuum suction device 20, so as to enable the electrode plate 100 to be attached to the conveying surface of the conveying body 12.

In some embodiments, the cell electrode plate feeding method may further include: moving the cell electrode plate feeding device from the preset position after the electrode plate 100 is conveyed to a feeding position. The feeding position may refer to a position where the electrode plate 100 is in contact with the winding needle used for cell winding or with the electrode plate or separator already on the winding needle. At this point, the electrode plate 100 is already subjected to a pulling force.

The cell electrode plate feeding device provided in the present application may be configured to feed the positive electrode plate, and may also be configured to feed the negative electrode plate.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A cell electrode plate feeding device, comprising:
a conveying device (10), configured to convey an electrode plate (100) to be wound, the conveying device (10) comprising a support base (11) and a conveying body (12), the support base (11) comprising an accommodating cavity (111), the conveying body (12) being mounted on the support base (11), and the conveying body (12) being provided with a communicating portion, by means of which a space of the conveying body (12) on a side away from the accommodating cavity (111) is in communication with the accommodating cavity (111); and
a vacuum suction device (20) in communication with the accommodating cavity (111), the vacuum suction device (20) being configured to suck air between a conveying surface of the conveying body (12) and the electrode plate (100), so as to enable the electrode plate (100) to be attached to the conveying surface of the conveying body (12).

2. The cell electrode plate feeding device according to claim 1, wherein the conveying body (12) comprises a suction region, the communicating portion is disposed in the suction region, and a width of the suction region is less than a width of the electrode plate (100).

3. The cell electrode plate feeding device according to claim 1 or 2, wherein the conveying body (12) comprises a first pulley (121), a second pulley (122) and a plurality of conveyor belts (123), the first pulley (121) and the second pulley (122) are rotatably mounted on the support base (11), respectively, the conveyor belts (123) are mounted on the first pulley (121) and the second pulley (122), every two adjacent conveyor belts (123) have a gap therebetween, and the gaps form the communicating portion.

4. The cell electrode plate feeding device according to claim 3, wherein the conveying device (10) further comprises a first supporting plate (13), the first supporting plate (13) is detachably mounted on the support base (11), and the first supporting plate (13) is provided with a through hole (133) for exposing the conveyor belts (123).

5. The cell electrode plate feeding device according to claim 4, wherein the conveyor belts (123) are not lower than the plane where the first supporting plate (13) is located.

6. The cell electrode plate feeding device according to claim 4 or 5, wherein the conveying device (10) further comprises a second supporting plate (14), the second supporting plate (14) being connected to a downstream portion of the first supporting plate (13) in a conveying direction of the conveying device (10).

7. The cell electrode plate feeding device according to claim 6, wherein the second supporting plate (14) is made of a flexible material.

8. The cell electrode plate feeding device according to claim 6 or 7, wherein the second supporting plate (14) comprises an arc-shaped portion, the arc-shaped portion being bent in a direction close to the support base (11).

9. The cell electrode plate feeding device according to any one of claims 6 to 8, wherein a transition fillet (141) is provided at a junction between a first side surface of the second supporting plate (14) and a second side surface of the second supporting plate (14), the first side surface is a side surface of the second supporting plate (14) away from the conveying body (12), and the second side surface is arranged adjacent to the first side surface.

10. The cell electrode plate feeding device according to any one of claims 1 to 9, further comprising a blowing device (30), the blowing device (30) being configured to blow air to a side surface, close to the conveying surface of the conveying body (12), of the electrode plate (100) leaving the conveying body (12).

11. The cell electrode plate feeding device according to claim 10, wherein an included angle formed between a flow direction of an airflow blown from the blowing device (30) and the conveying surface of the conveying body (12) is adjustable.

12. The cell electrode plate feeding device according to claim 10 or 11, wherein the blowing device (30) comprises an air delivery pipe (31), the air delivery pipe (31) is provided with a plurality of air outlet holes (32), and the air delivery pipe (31) is rotatably disposed relative to the support base (11).

13. The cell electrode plate feeding device according to claim 12, wherein the plurality of air outlet holes (32) are spaced apart in a direction perpendicular to a conveying direction of the conveying device (10).

14. The cell electrode plate feeding device according to claim 12 or 13, wherein the blowing device (30) further comprises a connecting member, the air delivery pipe (31) is rotatably mounted on the support base (11), the support base (11) is provided with a first connecting hole (117), and the connecting member is detachably inserted into the first connecting hole (117) and abuts against the air delivery pipe (31), so as to keep the air delivery pipe (31) and the support base (11) fixed relative to each other after the relative positions of the air delivery pipe (31) and the support base (11) are adjusted.

15. The cell electrode plate feeding device according to any one of claims 1 to 14, further comprising a connecting plate (40), the support base (11) being connected to the connecting plate (40), and an angle formed between the support base (11) and the connecting plate (40) being adjustable.

16. The cell electrode plate feeding device according to claim 15, wherein the support base (11) and the connecting plate (40) are rotatably connected.

17. The cell electrode plate feeding device according to claim 15 or 16, wherein the support base (11) comprises a connecting pin (119), the connecting plate (40) is provided with an arc-shaped second connecting hole (41), and the connecting pin (119) is inserted in the second connecting hole (41).

18. A cell manufacturing apparatus, comprising a cell electrode plate feeding device according to any one of claims 1 to 17.

19. A cell electrode plate feeding method, based on a cell electrode plate feeding device according to any one of claims 1 to 17, the method comprising:
moving the cell electrode plate feeding device to a preset position before feeding; and
conveying an electrode plate (100) to be wound by means of the conveying device (10), and during conveying, sucking air between a conveying surface of the conveying body (12) and the electrode plate (100) by means of the vacuum suction device (20), so as to enable the electrode plate (100) to be attached to the conveying surface of the conveying body (12).
